(19) Europäisches Patentamt
European Patent Office
Office européen des brevets

(11) **EP 1 626 361 B1**

(12) **EUROPÄISCHE PATENTSCHRIFT**

(45) Veröffentlichungstag und Bekanntmachung des Hinweises auf die Patenterteilung:
**05.12.2007 Patentblatt 2007/49**

(51) Int Cl.:
***G06K 7/00*** *(2006.01)*      ***H01R 13/64*** *(2006.01)*
***G01R 31/02*** *(2006.01)*

(21) Anmeldenummer: **05017276.6**

(22) Anmeldetag: **09.08.2005**

(54) **Anordnung zur Identifikation und Lokalisation von Gegenständen**

Arrangement for the identification and the localisation of objects

Installation pour l'identification et la localisation des objets

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.08.2004 DE 102004038685**

(43) Veröffentlichungstag der Anmeldung:
**15.02.2006 Patentblatt 2006/07**

(73) Patentinhaber: **TKM Telekommunikation und Elektronik GmbH**
**41238 Mönchengladbach (DE)**

(72) Erfinder:
• **Gerlach, Bernd**
**64297 Darmstadt (DE)**
• **Schwarz, Stephan**
**41061 Mönchengladbach (DE)**

(74) Vertreter: **Meyer, Ludgerus**
**Jungfernstieg 38**
**20354 Hamburg (DE)**

(56) Entgegenhaltungen:
**WO-A-02/29929          DE-A1- 19 841 738**
**DE-B3- 10 244 304      US-A- 5 522 509**
**US-A- 5 910 776         US-A- 5 977 875**
**US-B1- 6 535 744**

**Beschreibung**

Die Erfindung betrifft eine Anordnung zur Identifikation und Lokalisation von Gegenständen nach dem Oberbegriff des Anspruchs 1.

Die Identifikation und Lokalisation von Gegenständen jeglicher Art ist ein ständiges Problem im täglichen Leben. Während eine Identifikation von Gegenständen mit elektronischen Mitteln, z. B. mit Hilfe der RFID-Technologie, seit einigen Jahren zu einem Standardverfahren geworden ist, ist eine elektronische Lokalisation der Gegenstände, insbesondere wenn mehrere zu lokalisierende Gegenstände sich in unmittelbarer Nähe zueinander befinden, ein verbleibendes Problem. Es sind zwar Verfahren bekannt, bei denen jedem Gegenstand bzw. dem mit ihm verbundenen Identifikationmittel, ein Empfänger zugeordnet ist, jedoch ist ein solches Verfahren einerseits kostenaufwändig und andererseits dann nicht zu verwenden, wenn es aus räumlichen Gründen nicht möglich ist, eine Vielzahl von einzelnen Empfängern zu verwenden oder der jeweilige Ort der gleichzeitig zu lokalisierenden Gegenstände örtlich sehr genau erfasst werden muss.

Beispielsweise werden in heutigen Datennetzen zur Kopplung von Teilsystemen häufig Patchfelder verwendet, die in der Regel zwischen 8 und 24 Buchsen enthalten. In die Patchfelder können Patchkabel eingesteckt werden, deren anderes Ende entweder unmittelbar mit einer Übertragungseinheit, beispielsweise einem Datenverarbeitungsgerät, einem Netzwerk, einer Telekommunikationseinrichtung oder anderem, verbunden ist oder ihrerseits in ein anderes Patchpanel eingesteckt werden.

In großen Netzen ist es häufig erforderlich, die Patchstruktur zu verändern. In Systemen mit einer Vielzahl von Patchkabeln kann die Veränderung der Patchsituation jedoch sehr aufwendig und mühsam sein, da die Patchkabel meistens nicht individualisiert sind.

Aus der DE 102 44 304 B3 ist eine Anordnung zur Überwachung von Patchfeldern an Verteilerpunkten in Datennetzwerken bekannt, welche zur Identifizierung ein Reader/Transpondersystem verwendet, bei der beide Stecker eines Patchkabels mit je einem Transponder ausgerüstet sind und jeder Anschluss in einem Patchfeld eine Readerspule aufweist oder mit einem Reader ausgerüstet ist, wobei die Reader in Datenverbindung mit einer Auswertungseinheit stehen. Die Transponder enthalten jeweils eine individuelle Kennung, so dass jeder Steckverbinder mittels der Reader identifizierbar ist. Durch ein geeignetes Managementsystem kann somit sichergestellt werden, dass ein bestimmtes Patchkabel nur in eine bestimmte Buchse des Patchpanels eingesteckt werden kann.

Das dargestellte System arbeitet zwar theoretisch erfolgversprechend, jedoch hat es sich in praktischen Versuchen als zu aufwendig erwiesen. Insbesondere erfordern die den jeweiligen Buchsen eines Patchfeldes zuzuordnenden Readerspulen einen erheblichen konstruktiven Aufwand und Platz. Die Readerspulen benötigen an einem Patchfeld soviel Platz, dass standardisierte Patchfelder dafür nicht geeignet sind. Ein weiterer Nachteil liegt darin begründet, dass die verwendeten Transponder sich bei hoher Dichte und Anwesenheit von Metallen gegenseitig beeinflussen. Das System ist daher unflexibel und nur für kleinere Netze einsetzbar.

Aus Klaus Finkenzeller "RFID-Handbuch", 3. Auflage 2002, Carl Hanser Verlag, S. 203-209 sind Vielfachzugriffsverfahren zur gleichzeitigen Erfassung einer Mehrzahl von Transpondern mittels eines einzigen Lesegerätes bekannt. Bei dem dort angegebenen Frequenzmultiplexverfahren werden dazu Transponder eingesetzt, die jeweils auf einer bestimmten eigenen Antwortfrequenz senden, und daher für jeden Empfangskanal ein eigener Empfänger erforderlich ist. Das Verfahren ist daher nur in Spezialanwendungen verwendbar.

Aus der US 5,522,509 ist ein Verfahren zum Sortieren von Tellern eines Restaurants bekannt, bei dem jeder Teller einen unterseitigen Resonanzschwingkreis enthält, der von einer Antennenmatrix erfasst werden kann. Dadurch lässt sich der Ort jeden Tellers feststellen. Durch Verwendung unterschiedlicher Resonanzfrequenzen können auch unterschiedliche Teller voneinander unterschieden werden.

Der Erfindung liegt die Aufgabe zugrunde, eine Anordnung zur Identifikation und Lokalisation von im Wesentlichen kleinen Gegenständen, insbesondere Steckverbindern von Datenübertragungskabeln in Buchsenfeldern anzugeben, die auch bei hoher Anzahl und Dichte einen einfachen Aufbau bietet, eine sichere Identifikation und Lokalisation ermöglicht und sehr flexibel einsetzbar ist.

Diese Aufgabe wird durch die im Anspruch 1 angegebene Erfindung gelöst. Vorteilhafte Weiterbildungen der Erfindung sind in Unteransprüchen angegeben.

Die Erfindung geht aus von einer Anordnung zur Identifikation von im Wesentlichen kleinen Gegenständen, die mit Transpondern zur Kennzeichnung der Gegenstände versehen sind und an einem Zielort eine Empfangseinheit zur Identifikation der Gegenstände vorgesehen ist, wobei zur Lokalisierung der Gegenstände jeweils einer Gruppe von Zielorten eine Empfangseinheit zugeordnet ist, die zur Erfassung unterschiedlicher Frequenzen von den Transpondern ausgesendeter Funksignale eingerichtet ist.

Diese Frequenzen sind selektiv einzelnen Zielorten zugeordnet und die von den Transpondern ausgesandten Funksignale sind von der Empfangseinheit auf unterschiedlichen Frequenzen empfangbar.

Die Erfindung ist dadurch gekennzeichnet, dass die Transponder als RFID-Speicherchips ausgebildet sind, dass die Empfangseinheit eine Sende-/Empfangsantenne aufweist, die ein frequenzselektives Wechselfeld zur Anregung der RFID-Speicherchips aussendet, und dass die Sende-/Empfangsantenne einzelnen Zielorten örtlich zugeordnete frequenzselektive Empfangsschwingkreise enthält, deren Empfangssignale einer Auswerteschaltung zur Zuordnung eines Gegenstandes zu einem Zielort zugeführt werden.

Bei einer bevorzugten Anwendung der Erfindung zur Identifikation und Lokalisation von Steckverbindern gegenüber einem Buchsenfeld ist zur Lokalisierung der Gegenstände jeweils einer Gruppe von Zielorten eine Empfangseinheit zugeordnet, die zum Empfang unterschiedlicher Empfangsfrequenzen eingerichtet ist. Diese Frequenzen sind selektiv einzelnen Buchsen des Buchsenfeldes zugeordnet und die von den Transpondern ausgesandten Funksignale sind von der Empfangseinheit auf unterschiedlichen Frequenzen empfangbar.

Die Transponder sind als RFID-Speicherchips ausgebildet, die unmittelbar an den Kabeln der Steckverbinder bzw. an den Steckverbindern selbst befestigt sind. Die RFID-Speicherchips sind vorzugsweise als flexible Folie ausgestaltet und auf die Kabel bzw. Stecker aufgeklebt. Sie können auch in die Steckerummantellung oder das Kabel integriert sein.

Bei einem RFID-System wird üblicherweise ein sogenannter Reader verwendet, der einerseits ein hochfrequentes Wechselfeld erzeugt, um die als Transponder bezeichneten RFID-Speicherchips mit Energie zu versorgen, wenn sich diese im Wechselfeld des Readers befinden, und andererseits die von den Transpondern abgestrahlte Hochfrequenz empfängt. Die Transponder sind mit einem Schwingkreis ausgestattet, der auf eine feste Frequenz abgestimmt ist. Die Nutz-Information findet sich üblicherweise in den Seitenbändern der vom RFID-Speicherchip ausgesandten Frequenzen. Die Einfachheit des Aufbaus eines RFID-Speicherchips führt allerdings auch dazu, dass der Speicherchip nicht nur bei der festgelegten Frequenz des Schwingkreises Energie abstrahlt, sondern auch bei Vielfachen oder Anharmonischen der Grundfrequenz. Die Erfindung nutzt vorzugsweise dieses Verhalten des RFID-Speicherchips, um in der Empfangseinheit selektiv einzelne Oberwellen bzw. Anharmonische und deren Seitenbänder auszuwerten.

Wenn die Empfangseinheit, d.h. ein Reader in einem RFID-System, so eingerichtet ist, dass den einzelnen Buchsen eines Buchsenfeldes jeweils eine bestimmte Empfangsfrequenz zugeordnet ist, kann auf diese Weise festgestellt werden, ob eine bestimmte Buchse durch einen Stecker belegt ist. Damit lässt sich eine genaue Lokalisierung von Steckern neben der Identifizierung der im RFID-Speicherchip enthaltenen Information vornehmen.

Die Buchsen des Buchsenfeldes können beliebig angeordnet sein, beispielsweise in parallelen Reihen übereinander. Des weiteren ist es auch möglich, eine Lokalisierung und Identifizierung an Teil-Buchsen von Mehrfachbuchsen, z.B. Vierfachbuchsen, vorzunehmen, denn der Platzbedarf einer bei der Erfindung benutzten Empfangseinheit ist so klein, dass eine Lokalisation auf engstem Raum erfolgen kann. Da jeweils nur ein Reader für eine oder mehrere Gruppen von Buchsen notwendig ist, kann in Abhängigkeit von der Zahl der möglichen Sendefrequenzen eines RFID-Speicherchips eine entsprechend hohe Zahlen an Buchsen angesprochen werden.

Obgleich es bevorzugt ist, Harmonische einer Grundfrequenz auszuwerten, ist es auch möglich, Anharmonische der Grundfrequenz auszuwerten, wenn entsprechende Sendefrequenzen vom RFID-Speicherchip ausgesendet werden.

Obgleich es allgemein gewünscht ist, den Anteil ausgesendeter Nebenfrequenzen einer Grundfrequenz eines RFID-Speicherchips so klein wie möglich zu halten, wird bei der Erfindung der umgekehrte Weg eingeschlagen, nämlich indem ausgehend von einer Grundfrequenz ein breites harmonisches oder anharmonisches Oberwellenspektrum ausgewertet wird. Da der wirksame Empfangsbereich des erfindungsgemäßen Systems nur wenige Zentimeter betragen muss, sind solche Störstrahlungen" außerhalb des erfindungsgemäßen Systems zu vernachlässigen.

Zur örtlichen Feststellung eines Steckverbinders in einem Buchsenfeld weist die Empfangseinheit vorzugsweise den einzelnen Buchsen des Buchsenfeldes örtlich zugeordnete Empfangsschwingkreise auf, deren Empfangssignale einer Auswerteschaltung zur Zuordnung eines Steckverbinders zu einer Buchse zugeführt werden. Die Empfangsschwingkreise sind insbesondere als Reihenschwingkreise einer mit der Empfangseinheit verbunden Antenne ausgebildet. Bei Verwendung von Ferritkernen benötigt jeder Reihenschwingkreis nur wenige Windungen, um zusammen mit einer Kapazität frequenzselektive Eigenschaften zu erhalten.

Die Erfindung nutzt daher verschiedene Resonanzfrequenzen, um in einem Antennenrasterfeld mit verschieden ausgebildeten Schwingkreisen den Steckverbindern zugeordnete gleichartige Transponder den Buchsen örtlich zuzuordnen und über eine geeignete Auswerteelektronik einzeln mit ihnen zu kommunizieren.

Die Erfindung benötigt lediglich eine einzelne Antenne, deren in Reihe geschaltete Spulen den zu erfassenden Buchsen zugeordnet sind.

Durch die Erfindung lässt sich neben der Identifizierung eine genaue räumliche Zuordnung eines RFID-Speicherchips bzw. eines damit verbundenen Steckers zu mehreren Buchsen eines Buchsenfeldes erreichen, so dass mit hoher Sicherheit festgestellt werden kann, welche Buchse durch welchen Stecker belegt ist. Die entsprechenden Feststellungen werden vorzugsweise in einem Patch-ManagementSystem weiter verarbeitet.

Die Erfindung kann in einer Vielzahl von weiteren Anwendungsfällen eingesetzt werden, in denen sowohl eine Identifikation als auch die Lokalisation eines Gegenstandes in Bezug auf einen bestimmten Zielort gewünscht ist. Insbesondere kann die Erfindung bei jeglichen Waren verwendet werden, die in einem Aufnahmemagazin oder Ähnlichem (Lager, elektrische Buchsen, mechanische, pneumatische, hydraulische oder elektrische Verbinder) selektiv zugeordnet werden müssen.

Eine weitere bevorzugte Anwendung liegt im Bereich der Medizin zur Identifizierung und Lokalisierung von medizinischen Proben, beispielsweise zur Laboruntersuchung, um Verwechselungen der Proben zu verhindern. Hierbei ist die Probe bzw. der Aufnahmebehälter mit einem RFID-Chip versehen und der Probenträger enthält eine Empfangseinheit, die in der Lage ist, den Ort jeder Probe im Probenträger festzustellen. Die Kenntnis des Ortes erlaubt eine erheblich vereinfachte Probenlogistik

Die Erfindung wird nachstehend anhand eines Ausführungsbeispiels näher erläutert.

Es zeigen

Fig. 1    den technischen Aufbaus eines RFID-Readers mit einer einzigen Antenne,

Fig. 2    eine Darstellung der Frequenzverteilung an einer Mehrkammerbuchse,

Fig. 3    die Anordnung einer Antenne in einer Reihenbuchsenanordnung

Fig. 4    eine Prinzipdarstellung einer Anpassschaltung.

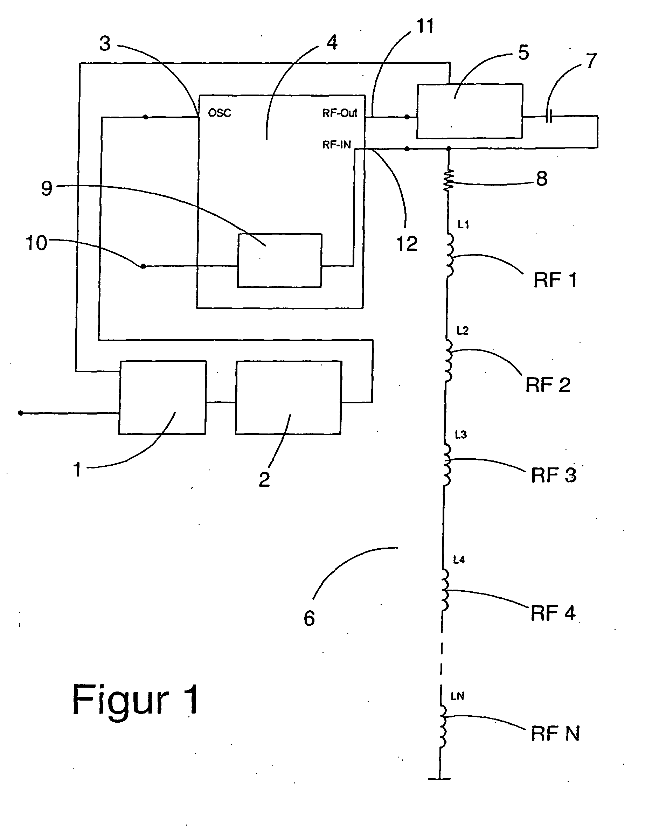

Figur 1 zeigt einen RFID-Reader mit einer Steuereinheit 1, über die das RFID-System allgemein gesteuert wird. Die Steuereinheit 1 steuert einerseits eine Frequenzeinheit 2, die mit dem Frequenzeingang 3 des Lesegeräts 4 verbunden ist und andererseits eine Anpassschaltung 5. Die Anpassschaltung 5 erzeugt zusammen mit dem jeweils geschalteten Schwingkreis, gebildet aus einer Spule der Antenne 6 und einer Kapazität, ein hochfrequentes Wechselfeld, das von Transpondern, die sich im Nahfeld der Sendeantenne befinden, erfasst, gleichgerichtet und zur Energieversorgung des Transponders verwendet wird.

Der in Figur 1 dargestellte Reader enthält eine Antenneneinheit 6, die aus einer Reihenschaltung mehrerer Spulen $L_1$ - $L_N$ gebildet ist, die jeweils einige Windungen enthalten, und jeweils um einen kleinen Ferritkern gewickelt sind. Die Einzelspulen $L_1$ - $L_N$ bilden jeweils zusammen mit dem Kondensator 7 Schwingkreise, die auf die Grundfrequenz, auf deren Oberwellen oder auf Anharmonische der Grundfrequenz abgestimmt sind. In ihrer Funktion als Empfangsantenne ist die Antenneneinheit 6 mit einem Receiver 9 im Lesegerät 4 verbunden, welcher die von den Einzelschwingkreisen erfassten Frequenzsignale auswertet und als Datensignale am Ausgang 10 des Lesegerätes 4 zur Weiterverarbeitung abgibt.

Wenn beispielsweise an der Schwingkreisspule L3 ein Empfang stattfindet, d.h. sich ein Transponder in unmittelbarer Nähe einfindet, erfasst der Receiver 9 das Hochfrequenzsignal und dessen Seitenbänder und gibt ein Datensignal am Ausgang 10 ab. Aus der Kenntnis der Zuordnung einer Empfangsfrequenz zu einem einzigen bestimmten Schwingkreis ergibt sich, dass in diesem Fall die Schwingkreisspule L3 angesprochen wurde, und damit ein Steckverbinder in eine der Schwingkreisspule L3 zugeordnete Buchse eingesteckt wurde. Aus den identifizierten Daten des RFID-Speicherchips kann ferner festgestellt werden, ob ein "richtiger" Steckverbinder in die der Schwingkreisspule L3 zugeordnete Buchse eingesteckt wurde.

Die Aufgabe der Anpassschaltung 5 besteht darin, abwechselnd das am Ausgang 11 des Lesegerätes 4 anstehende Wechselfeld an die Antenne 6 und das von der Antenne 6 empfangene Signal an den Eingang 12 des Lesegerätes zu liefern, wobei geschaltete Kapazitäten die jeweiligen Frequenzen bestimmen.

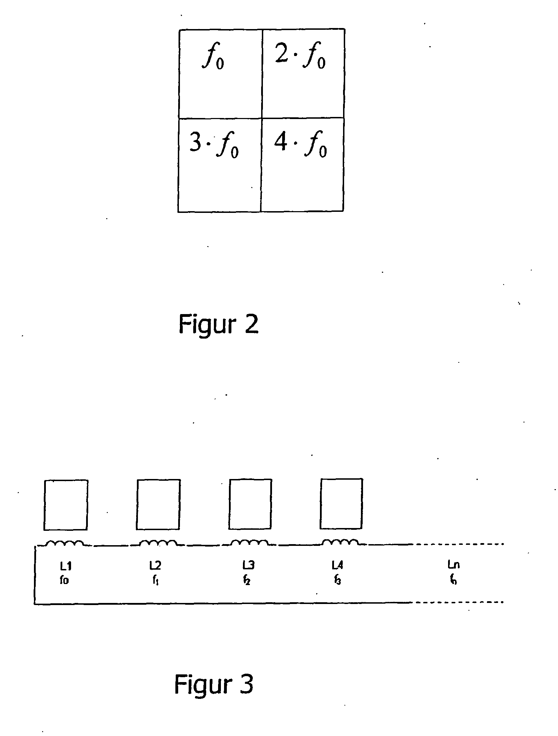

Figur 2 zeigt schematisch die Ansicht einer Mehrkammerbuchse, bei der die Frequenzen $F_0$, 2 x $F_0$, 3 x $F_0$, 4 x $F_0$ jeweils einer bestimmten Buchsenkammer zugeordnet sind. Dadurch ist leicht feststellbar, in welche Kammerbuchse ein Steckverbinder eingesteckt ist.

Figur 3 zeigt mehrere nebeneinander angeordnete Buchsen eines Patchpanels, denen jeweils, beispielsweise an der Unterseite, Reihenschwingkreise L1 - L4 einer einzigen Antenne zugeordnet sind. Auch hierbei ist eine örtliche Lokalisierung und Identifizierung eines eingesteckten Steckverbinders ermöglicht.

Bei der Erfindung ist es nicht erforderlich, die absolute Größe der aufgrund der festgestellten Resonanzfrequenzen bewirkten Spannungsänderungen festzustellen.

Es genügt festzustellen, dass bei verschiedenen Resonanzfrequenzen Spannungsänderungen auftreten.

Um bei einer Resonanzfrequenz einen maximalen Strom zu erwirken, genügt ein einfacher Aufbau der Schaltung mittels des Kondensators 7, der Anpassschaltung 5 und der Verwendung von Spulen $L_1$ - $L_n$ unterschiedlicher Windungszahl, um verschiedene Serienresonanzkreise zu bilden.

Die Impedanz eines Transponders kann durch folgende Formel beschrieben werden:

$$Z_T = j \cdot \omega \cdot k \cdot \sqrt{Ln \cdot L_T} \cdot i_T$$

Die Transponderimpedanz beeinflusst bei Annähern an die Antenne den Antennenserienschwingkreis und kann als Reihenschaltung mit dem Schwingkreis betrachtet werden. Die Frequenzeinheit bestimmt dabei die unterschiedlichen Trägerfrequenzen. Die Anpassschaltung wird so gesteuert und geschaltet, dass bei einer bestimmten geschalteten Frequenz $f_n$ die Schwingkreisspulen gemäß der Formel

$$L_{k \neq n} = \sum_{m=1}^{n-1} L_m$$

so kompensiert werden, dass jede bestimmte Trägerfrequenz einer bestimmten Spule zugeordnet wird.

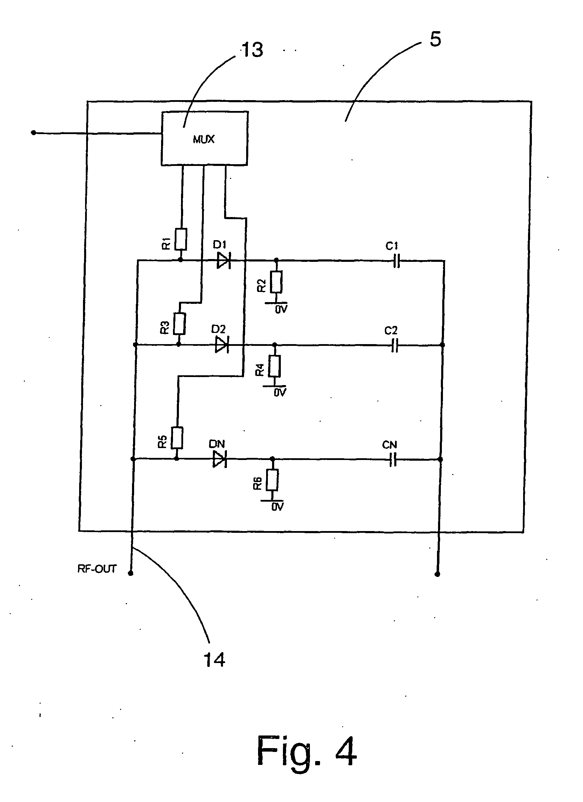

Fig. 4 zeigt eine Prinzipdarstellung einer Anpassschaltung 5. Die Steuereinheit 1 schaltet und steuert den Multiplexer 13. Der Ausgang 14 der Anpassschaltung 5 ist mit dem Eingang 12 des Lesegerätes 4 verbunden.

Die Steuereinheit 1 ordnet über die Frequenzeinheit 2 dem Lesegerät unterschiedliche Trägerfrequenzen zu, die über die Anpassschaltung 5 an die Antenne 6 geführt werden, wobei die Einzelspulen $L_1$ - $L_N$ zusammen mit den Kapazitäten $C_1$ - $C_N$ die jeweils wirksamen Schwingkreise bilden. Die unterschiedlich geschalteten Kapazitäten $C_1$ - $C_N$, die vereinfacht dem Kondensator 7 in Fig. 1 entsprechen, kompensieren die für die unterschiedlichen Resonanzfrequenzen jeweils nicht benötigten Induktivitäten.

Die gleiche Schwingkreisanordnung empfängt dann auch die Signale der Transponder, so dass über die Zuordnung einer Spule $L_1$ - $L_N$ zu der Buchse eine eindeutige Lokalisierung eines Transponders in Bezug auf eine Buchse erreicht wird.

Die Auswertung der Ausgangssignale ist Grundlage für ein Patch-ManagementSystem für multimediale Verbindungstechniken. Diese Verbindungstechniken verwenden meist Mehrkammersysteme mit der Möglichkeit, mehrere Applikationen gleichzeitig über eine Schnittstelle zu übertragen.

Bezugszeichen

1    Steuereinheit
2    Frequenzeinheit
3    Frequenzeingang
4    Lesegerät
5    Anpassschaltung
6    Antenne
7    Kondensator
8    Widerstand
9    Receiver
10   Datenausgang
11   Ausgang
12   Eingang
13   Multiplexer
14   Ausgang

**Patentansprüche**

1. Anordnung zur Identifikation und Lokalisation von im Wesentlichen kleinen Gegenständen, die mit Transpondern zur Kennzeichnung der Gegenstände versehen sind und an einem Zielort eine Empfangseinheit zur Identifikation der Gegenstände vorgesehen ist, wobei zur Lokalisierung der Gegenstände in Bezug auf den Zielort jeweils einer Gruppe von Zielorten eine Empfangseinheit zugeordnet ist, die zur Erfassung unterschiedlicher Frequenzen von den Transpondern ausgesendeter Funksignale eingerichtet ist, **dadurch gekennzeichnet, dass** die Transponder als RFID-Speicherchips ausgebildet sind, dass die Empfangseinheit eine Sende-/Empfangsantenne aufweist, die ein frequenzselektives Wechselfeld zur Anregung der RFID-Speicherchips aussendet, und dass die Sende-/Empfangsantenne einzelnen Zielorten örtlich zugeordnete frequenzselektive Empfangsschwingkreise enthält, deren Empfangssignale einer Auswerteschaltung zur Zuordnung eines Gegenstandes zu einem Zielort zugeführt werden.

2. Anordnung nach Anspruch 1, bei der die Gegenstände Steckverbinder von Datenübertragungkabeln in Buchsenfeldern (2) sind, und den Buchsen des Buchsenfeldes eine Empfangseinheit zur Identifikation von in die Buchsen eingesteckten Steckverbindern zugeordnet ist, **dadurch gekennzeichnet, dass** zur Lokalisierung der Steckverbinder gegenüber den Buchsen des Buchsenfeldes jeweils einer Gruppe von Buchsen des Buchsenfeldes eine Empfangseinheit zugeordnet ist, die zur Erfassung unterschiedlicher Empfangsfrequenzen eingerichtet ist, die selektiv einzelnen Buchsen des Buchsenfeldes zugeordnet sind.

3. Anordnung nach Anspruch 1, **dadurch gekennzeichnet, dass** die unterschiedlichen Empfangsfrequenzen Anharmonische oder Mehrfache einer Grundfrequenz bilden.

4. Anordnung nach Anspruch 2, **dadurch gekennzeichnet, dass** eine Gruppe von Buchsen eine oder mehrere Vierfachbuchsen in einem Patchpanel bildet.

5. Anordnung nach Anspruch 1, bei der die Gegenstände Waren sind, die in einem mit einer Empfangseinheit versehenen Aufnahmemagazin aufgenommen sind.

6. Anordnung nach Anspruch 1, bei der die Gegenstände medizinische Proben sind, welche sich in einem Rasterfeld befinden, und dass die Empfangseinheit einer Gruppe von Aufnahmefeldern des Rasterfeldes zugeordnet ist.

## Claims

1. Arrangement for identifying and locating substantially small objects that are provided with transponders for designating the objects, there being provided at a destination a receiving unit for identifying the objects and, for the purpose of locating the objects in relation to the destination, respectively one receiving unit being assigned to a group of destinations, which receiving unit is set up to detect differing frequencies of radio signals emitted by the transponders, **characterized in that** the transponders are realized as RFID memory chips, the receiving unit has a transmitting/receiving antenna which emits a frequency-selective alternating field for excitation of the RFID memory chip, and the transmitting/receiving antenna comprises frequency-selective oscillating receiver circuits which are locally assigned to individual destinations and whose received signals are supplied to an evaluation circuit for the purpose of assigning an object to a destination.

2. Arrangement according to Claim 1, wherein the objects are plug-in connectors of data transmission cables in patch panels (2) and, for the purpose of identifying plug-in connectors inserted in the sockets, a receiving unit is assigned to the sockets of the patch panel, **characterized in that**, for the purpose of locating the plug-in connectors in respect of the sockets of the patch panel, one receiving unit is respectively assigned to a group of sockets of the patch panel, which receiving unit is set up to detect differing reception frequencies that are selectively assigned to individual sockets of the patch panel.

3. Arrangement according to Claim 1, **characterized in that** the differing reception frequencies constitute anharmonics or multiples of a fundamental frequency.

4. Arrangement according to Claim 2, **characterized in that** a group of sockets constitutes one or more quadruple sockets in a patch panel.

5. Arrangement according to Claim 1, wherein the objects are goods accommodated in a holding magazine which is provided with a receiving unit.

6. Arrangement according to Claim 1, wherein the objects are medical samples present in a matrix, and the receiving unit is assigned to a group of holding compartments of the matrix.

## Revendications

1. Installation pour l'identification et la localisation d'objets globalement petits qui sont pourvus de transpondeurs pour être identifiés, une unité de réception étant prévue à un endroit cible pour identifier les objets, étant précisé que pour localiser les objets par rapport à l'endroit cible, une unité de réception conçue pour enregistrer différentes fréquences de signaux radio émis par les transpondeurs est associée à chaque groupe d'endroits cibles, **caractérisée en ce que** les transpondeurs sont conçus comme des puces RFID (identification par radiofréquence), **en ce que** l'unité de réception comporte une antenne d'émission/réception qui émet un champ alternatif à fréquences sélectives pour activer les puces RFID, et **en ce que** l'antenne d'émission/réception contient des circuits de réception oscillants à sélection de fréquence qui sont associés localement à des endroits cibles individuels et dont les signaux de réception sont transmis à un circuit d'analyse pour associer un objet à un endroit cible.

2. Installation selon la revendication 1, dans laquelle les objets sont définis par des connecteurs de câbles de transmission de données dans des zones de douilles (2), et une unité de réception destinée à identifier des connecteurs introduits dans les douilles est associée aux douilles de la zone de douilles, **caractérisée en ce que** pour la localisation des connecteurs par rapport aux douilles de la zone de douilles, il est prévu, associée à chaque groupe de douilles de ladite zone, une unité de réception qui est conçue pour enregistrer différentes - fréquences de réception associées sélectivement à des douilles individuelles de la zone de douilles.

3. Installation selon la revendication 1, **caractérisée en ce que** les différentes fréquences de réception forment des rapports anharmoniques ou des multiples d'une fréquence de base.

4. Installation selon la revendication 2, **caractérisée en ce qu'**un groupe de douilles forme une ou plusieurs douilles quadruples dans un tableau de connexions.

5. Installation selon la revendication 1, dans laquelle les objets sont des produits qui sont logés dans un magasin pourvu d'une unité de réception.

6. Installation selon la revendication 1, dans laquelle les objets sont des échantillons médicaux qui se trouvent dans une zone quadrillée, et en ce que l'unité de réception est associée à un groupe de zones de réception de la zone quadrillée.

Figur 1

| $f_0$ | $2 \cdot f_0$ |
|---|---|
| $3 \cdot f_0$ | $4 \cdot f_0$ |

Figur 2

| | | | | |
|---|---|---|---|---|
| L1 | L2 | L3 | L4 | Ln |
| f0 | f1 | f2 | f3 | fn |

Figur 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10244304 B3

- US 5522509 A

**In der Beschreibung aufgeführte Nicht-Patentliteratur**

- **KLAUS FINKENZELLER.** RFID-Handbuch. Carl Hanser Verlag, 2002, vol. 3, 203-209